# EUROPÄISCHE PATENTANMELDUNG

(11) **EP 0 779 123 A2**
(43) Veröffentlichungstag der Anmeldung: **18.06.1997**
(21) Anmeldenummer: 96117774.8
(22) Anmeldetag: 06.11.1996
(51) Int. Cl.: B23D 61/12, B27B 33/04

(54) **Gattersägen mit Räumschneiden**

(30) Priorität: 07.11.1995 DE 19541292
(71) Anmelder: Röttger Jansen-Herfeld, 42824 Remscheid (DE)
(72) Erfinder: Röttger, Jansen-Herfeld, Dipl.-Ing., 42824 Remscheid (DE)

(57) **Zusammenfassung**

Gattersägeblatt mit Ausnehmungen und Räumkanten, die über die Seitenflächen des Sägeblattes vorstehen, um den Sägemehltransport zu verbessern und die Reibungserwärmung zu reduzieren.

## Beschreibung

Die bekannten Gattersägeblätter haben den Nachteil, daß die Zahnlücken nicht das anfallende Spanvolumen aufnehmen können und dieses somit an den Sägeblattseitenflächen vorbeigedrückt wird, wodurch das Sägeblatt erwärmt und der Schneiddruck erhöht wird.

Der Erfindung liegt die Aufgabe zugrunde, ein Gattersägeblatt zu schaffen, bei dem der seitliche Sägemehlabfluß über die Sägeblattbreite verbessert wird.

Das erfindungsgemäße Gattersägeblatt weist Ausnehmungen auf mit Räumkanten, die das Sägemehl bei der Abwärtsbewegung des Sägeblattes nach unten bzw. zum Sägeblattrücken fördern. Außerdem sind diese Ausnehmungen erfindungsgemäß in einer Sonderausführung über eine größere Sägeblattbreite verteilt und die der Verzahnung naheliegenden Ausnehmungen nur über eine geringe Sägeblattlänge verteilt. Vorzugsweise weisen die Räumkanten nach unten und sind diagonal etwa parallel zur Zahnbrust angeordnet.

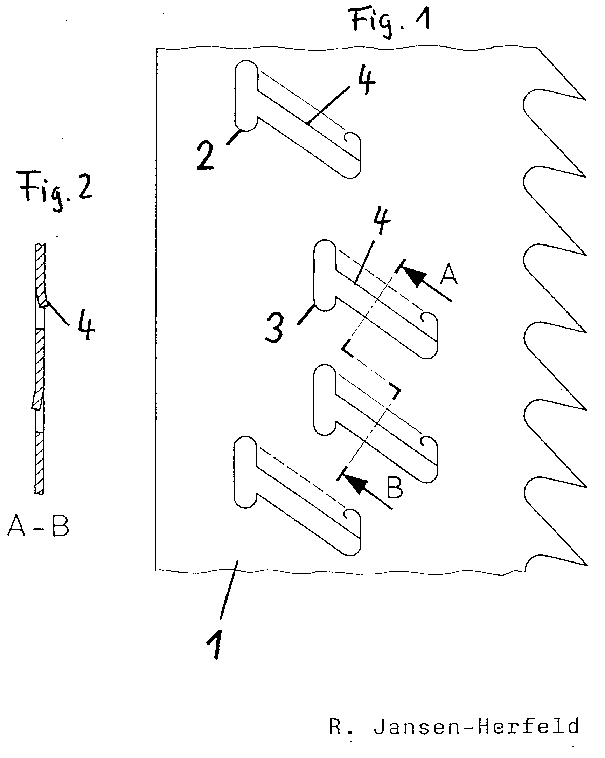

Figur 1 zeigt das erfindungsgemäße Sägeblatt (1) mit den hinteren Ausnehmungen (2) und den vorderen Ausnehmungen (3) mit ihren jeweiligen Räumkanten (4), die wechselweise geschränkt sind.

Figur 2 zeigt das Sägeblatt (1) nach dem Schnitt A-B mit den Räumkanten (4).

### Bezugszeichenliste

- 1: Gattersägeblatt
- 2: hintere Ausnehmung
- 3: vordere Ausnehmung
- 4: Räumkante

## Patentansprüche

1. Gattersägeblatt mit länglichen Ausnehmungen, dadurch gekennzeichnet, daß die hinteren Ausnehmungen (2) und/oder die vorderen Ausnehmungen (3) Räumkanten (4) aufweisen, die mindestens auf einer Seite über die Seitenfläche des Sägeblattes (1) wechselweise vorstehen oder durch zusätzlich aufgebrachte Schneidleisten beidseitig vorstehen.

2. Gattersägeblatt mit länglichen Ausnehmungen nach Anspruch 1 dadurch gekennzeichnet, daß die hinteren Ausnehmungen (2) bzw. die vorderen Ausnehmungen (3) mit ihren Räumkanten (4) diagonal angeordnet sind, in der Form, daß diese etwa parallel zur Zahnbrust liegen.

3. Gattersägeblatt mit länglichen Ausnehmungen nach einem oder mehreren der Ansprüche 1 bis 2 dadurch gekennzeichnet, daß die vorderen Ausnehmungen (3) eine weit geringe Anzahl aufweisen als die hinteren Ausnehmungen (2) und in der Sägeblattlängsmitte etwa angeordnet sind.
